# EUROPEAN PATENT APPLICATION

(11) **EP 4 600 186 A1**
(43) Date of publication of application: **13.08.2025**
(21) Application number: 25151905.4
(22) Date of filing: 15.01.2025
(51) Int. Cl.: B65G 47/54, B66F 9/06

(54) **ACTUATOR SITUATED IN CONNECTION WITH AN UNMANNED TRANSPORT DEVICE AND A TRANSPORT ARRANGEMENT**

(30) Priority: 15.01.2024 FI 20245030; 15.01.2024 FI 20244006 U
(71) Applicant: Dimalog Oy, 00380 Helsinki (FI)
(72) Inventor: MONONEN, Jouni, 00220 Helsinki (FI); KYTÖMÄKI, Teemu, 00530 Helsinki (FI)
(74) Representative: Salomäki, Juha Kari Ensio

(57) **Abstract**

The object of the invention is an actuator (1) situated in connection with an unmanned transport device, the actuator comprising a frame structure (3), a fastening mechanism (17) for fastening the actuator (1) into connection with a transport device, and actuator means for taking a load onto the actuator (1) and removing it from the actuator. The actuator means for taking and removing a load comprise a conveyor (4) and a lifting device (5) in the same actuator, which lifting device is arranged to move the load vertically in relation to the surface level of the conveyor. The object of the invention is also a transport arrangement comprising a mobile robot (2).

## Description

The object of the invention is an actuator situated in connection with an unmanned transport device as defined in the preamble of claim 1 and a transport arrangement as defined in the preamble of claim 8 as well as use of the actuator and transport arrangement as disclosed in claim 15.

The actuator according to the invention is suitable for being situated in connection with the unmanned conveying devices of different manufacturers. These types of transport devices are e.g. various mobile robots and AGV devices. A mobile robot is also called an AMR device, an acronym for the English words "autonomous mobile robot". Correspondingly, the designation AGV device is an acronym for the English words " "automated guided vehicle". In Finnish, an AGV device is also called a *"vihivaunu".*

Although hereinafter in a number of places in this application, for the sake of simplicity just the term 'mobile robot' is used to refer to an unmanned conveying device, said term can in this application also mean both an AGV device and also some other unmanned transport device, either developed or being developed, that is preferably provided with wheels.

Mobile robots are autonomously moving, automated, and controlled vehicles that are programmed to operate in both indoor and outdoor logistics environments, such as industrial environments, production lines, warehouses, distribution centers, and large department stores. Mobile robots are used in material transportation and logistics to transport various objects, goods and packaging, e.g. on an actuator connected to a mobile robot that acts as a transport device. Mobile robots can automate heavy or repetitive tasks, improving both efficiency and safety.

The basic structures, operating principles, guidance, controlling and operating methods of the aforesaid AMR and AGV devices, as well as of other transport devices suited to the purpose, are generally known in the art and so they will not be explained in more detail herein.

One solution known in the art for an actuator connected to a mobile robot is presented in international patent specification no. WO2023057447A1. In this solution, the actuator is intended to move a loaded trolley on wheels essentially horizontally. The actuator has vertically moving pins that are lifted into the counterparts in the trolley when the actuator has been moved to the right place under the trolley by means of a mobile robot. The actuator raises and lowers said pins. The actuator does not have an actual hoist or a conveyor. For this reason, the actuator can only be used for one purpose, i.e. for the horizontal transfer of a trolley rack provided with wheels of only certain dimensions.

There are also other actuators that can be placed on top of mobile robots, such as lifting equipment for lifting and lowering loads, especially pallets. In such a case, e.g. a pallet can be lifted from a special rack by driving a mobile robot into the middle of the rack, after which the pallet is lifted off the rack by means of a two-part lifting device on top of the robot, in essentially the same way as with a forklift, and moved by the mobile robot to the designated place, where the pallet is lowered again onto the rack. The actuator for such pallet handling is equipped with a special lifting device for this purpose, which is intended exclusively for this purpose. It is difficult to lift goods other than pallets with the device.

In addition, also known in the art are actuators placed on top of mobile robots, which actuators have a short conveyor system for the horizontal transfer of loads on separate packages and/or pallets. In this case, the packaging or pallet can be taken from a fixed conveyor, e.g. by driving a mobile robot to the end of the fixed conveyor and transferring the load on the fixed conveyor onto the conveyor of the actuator using both conveyors. One such solution has been proposed in US patent publication US11137772 B2. Since the mobile robot actuators provided with conveyors that are known in the art do not have a lifting device, they can only be used in conjunction with conveyors.

In the context of mobile robot logistics, cargo, i.e. pallets, packaging and corresponding, is handled almost exclusively in three different ways, which are: 1) Moving the load with conveyors, 2) Moving the load with hoists between the load carriers, and 3) Moving the load on a shelf or trolley.

The problem with all actuators known in the art that are placed into connection with a mobile robot or other unmanned transport device is that each actuator is intended for only one of the three uses mentioned above. An actuator provided with a conveyor is not capable of moving a load between load racks or of moving goods on a shelf or trolley. An actuator provided with lifting apparatus is not able to take the load from the conveyor or to unload its load onto the conveyor. Correspondingly, an actuator that moves shelves and trolleys is not able to transfer its load to the conveyor or to a pallet rack or to take the load off them.

With solutions known in the art, where the actuator connected to a mobile robot is only able to implement one of the three uses mentioned above, designers of automation for production and internal logistics must choose the best option for each situation. The functions of the actuator and the functions of the mobile robot must be compatible with each other. Therefore, only a mobile robot configured in a certain way is suitable for each actuator, and *vice versa.* This means that e.g. an actuator provided with a conveyor may not necessarily be able to be successfully connected to a mobile robot configured for a pallet lifter, *et cetera.* For this reason, as many mobile robots are often needed as there are actuators suitable for different intended uses. Mobile robots are expensive, so a prior-art solution is a very expensive solution and easily also leads to a suboptimal utilization rate.

If mobile robots configured for the aforesaid different uses are purchased from different manufacturers, the number of mobile robots can be reduced in some cases, but the problem is that then the robots also need several different types of chargers, spare parts, *et cetera.* This solution is very expensive and the logistical entity is inefficient.

In addition, the use of many different types of mobile robots, i.e. those configured for different uses, is associated with the problem that e.g. the failure of one type of robot can make another type of robot "unemployed".

An example is a situation where in one operating location there are two lifting robots, two conveyor robots and two trolley transfer robots in the same logistics chain. If, for example, one lifting robot fails, the capacity of the entire robot fleet will be halved. In the solution according to the invention, where the actuator has functions for three modes of operation and the mobile robots are configured for all three operating modes, if one robot fails, the capacity decreases by only 16.7% according to the same calculation formula.

The aim of the present invention is to eliminate the aforementioned drawbacks and to achieve an inexpensive, operationally reliable and easy-to-use actuator placed into connection with a mobile robot, which actuator enables the use of the same mobile robot for several different purposes. Furthermore, the aim is to create an inexpensive and logistically efficient transport arrangement, one part of which is an unmanned transport device, such as a mobile robot.

The actuator according to the invention is characterized by what is disclosed in the characterization part of claim 1, and the transport arrangement according to the invention is characterized by what is disclosed in the characterization part of claim 8, and also the use according to the invention is characterized by what is disclosed in the characterization part of claim 15. Other embodiments of the invention are characterized by what is disclosed in the other claims.

In order to achieve its purpose the solution according to the invention comprises an actuator placed into connection with an unmanned transport device, comprising a frame structure, a fastening mechanism for fastening the actuator into connection with a transport device, and actuator means for taking a load onto the actuator and removing it from the actuator. Preferably the actuator means for taking and removing a load comprise a conveyor and a lifting device in the same actuator, which lifting device is arranged to move the load vertically in relation to the surface level of the conveyor.

The object of the invention is also a transport arrangement comprising a mobile robot with an actuator fitted on top of it, which is arranged to handle different loads. Preferably, the actuator has both a conveyor and a lifting device to handle the load, which lifting device is arranged to move the load vertically in relation to the surface level of the conveyor.

One great advantage of the solution according to the invention is that with the solution according to the invention an intelligently functioning and flow-efficient logistics and production environment can be implemented, in which work between robots and humans is smooth and safe. Another advantage is that the failure of a mobile robot in the logistics chain does not reduce the capacity of the entire logistics chain as much as in solutions based on solutions known in the art.

One advantage also is that the side edges of the actuator are below the transport platform of the conveyor. In this case, the actuator can be driven inside a standard-sized pallet rack to take the pallet onto the actuator and lower the pallet onto the pallet rack. In addition, the load on top of the actuator can be wider than the actuator, because the distance between the side edges of the actuator does not limit the width of the load.

One advantage also is that the solution according to the invention can significantly reduce the overall costs of a mobile robot system that requires multiple functions, i.e. operating modes.

In the following, the invention will be described in greater detail by the aid of some embodiments and by referring to the simplified and diagrammatic drawings attached, wherein
- Fig. 1: presents one actuator according to the invention placed into connection with a mobile robot or similar unmanned transport device suitable for the purpose, viewed diagonally from above,
- Fig. 2: presents an actuator according to Fig. 1, as viewed from above,
- Fig. 3: presents a simplified side view of one partially sectioned lifting device to be used in the actuator according to the invention,
- Fig. 4: presents the lifting device according to Fig. 3 when viewed from the front with the lifting platforms raised to their upper position,
- Fig. 5: presents one conveyor to be used in an actuator according to the invention, viewed from the side and partially sectioned,
- Fig. 6: presents one actuator according to the invention, viewed from the front and partially sectioned, with the lifting platforms raised to their upper position, and
- Fig. 7: presents one edge of the actuator according to Fig. 6, enlarged and simplified, with the end wall of the conveyor part removed.

For the sake of simplicity, a mobile robot application is presented as an embodiment, but instead of a mobile robot, an AGV device or other unmanned transport device suitable for the purpose can also be used as a transport device. The term 'cargo' hereinafter refers generally to all types of loads to be transported on pallets, loads packed in boxes or other packaging, as well as goods, objects and products that can be lifted and that can be transported by a roller conveyor.

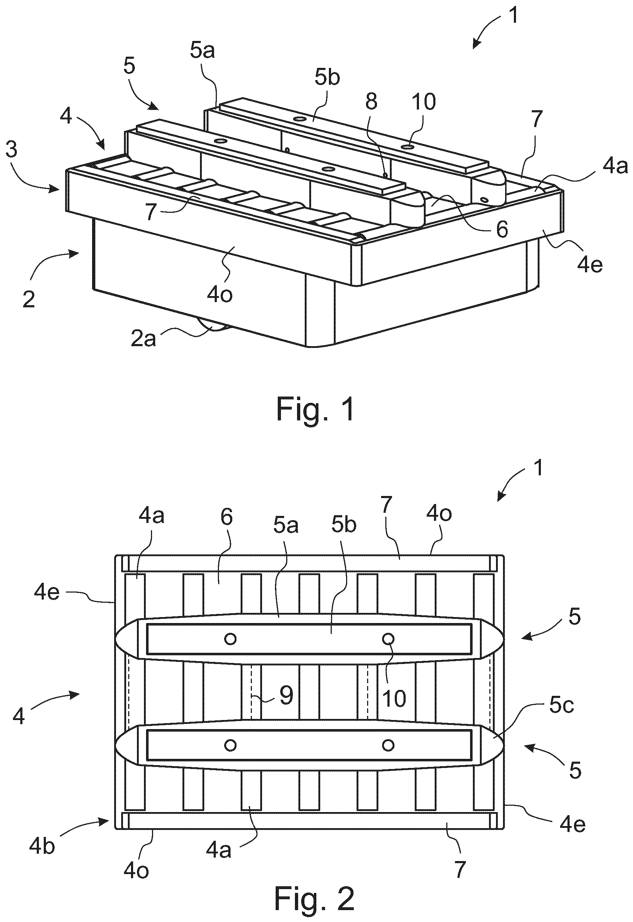

Fig. 1 presents one actuator 1 according to the invention, viewed diagonally from above, which is situated in connection with a mobile robot 2, or a corresponding unmanned transport device suitable for the purpose, that is moved via its frame structure 3 by means of its drive wheel 2a. Correspondingly, Fig. 2 shows the actuator 1 according to Fig. 1 viewed directly from above.

The actuator 1 comprises a conveyor 4, preferably a roller conveyor provided with rollers 4a, and a lifting device 5 provided with two lifting platforms 5b, which lifting device is specially configured for lifting pallets. The flat upper surface of the lifting platforms 5b of the lifting device 5 is also suitable for lifting other objects than pallets. In Fig. 1, the lifting platforms 5b are raised to their upper position.

The frame structures of the roller conveyor 4 and the lifting device 5 together form the frame structure 3 of actuator 1, which frame structure is connectable to a mobile robot 2, onto the upper surface of the mobile robot 2. The lifting device 5 comprises the two elongated, parallel casing structures 5a of the conveyor 4, said structures spaced at a horizontal distance from each other in the travel direction and situated directly on top of the rollers 4a of the conveyor, without however touching the rollers 4a.

The width of the casing structures 5a and the distance between them have been adapted to correspond to the space of commonly used pallets that suit e.g. the lifting forks of forklift trucks. In this case, a mobile robot 2 can drive under the pallet on the pallet rack in such a way that the casing structures 5a go inside the height space of the pallet.

The casing structure 5a is at its widest in the center of its length and tapers towards its ends. In addition, the casing structure 5a comprises an end part 5c at each of its ends, which end section when viewed from above tapers symmetrically towards the end of the casing structure 5a. When viewed from the side, the upper surface of the end part 5c is tilted forward, i.e. it lowers the casing structure 5a towards the end. The shape of the casing structure 5a facilitates the driving of the actuator 1 under the pallet.

Inside the casing structure 5a is the vertically moving lifting platform 5b of the lifting device 5. Preferably, when viewed from above the lifting platform 5b is rectangular in shape and adapted to the rectangular opening on the upper surface of the casing structure 5a. The lifting platform 5b and its operation are explained in more detail hereinafter.

Preferably, in connection with the lifting platforms 5b are means 10, which can be used when moving storage shelves and rack trolleys from one place to another to ensure that the objects to be moved remain on top of the actuator 1. At its simplest, the means are a plurality of openings 10 in the upper surface of the lifting platforms 5b, to which retaining pins that are in the same places in the storage shelves and rack trolleys and that correspond to the openings 10 can be placed when the lifting platforms 5b are lifted with the lifting device 5 to meet the counterparts of the storage shelves and rack trolleys.

On the roller conveyor 4 is a flat surface 6 between the rollers 4a, which surface prevents objects smaller than the distance between the rollers 4a from falling inside the actuator 1. The flat surface 6 may be essentially unitary or it may comprise a plurality of short surface plates that are not present under the casing structures 5a of the lifting means 5n.

Likewise, the surface plane of the roller conveyor 4 is the plane formed by the upper surface of the rollers 4a, which is essentially horizontal when a mobile robot 2 is on a flat and horizontal base. The load moving on the rollers 4a travels along the surface plane of the rollers 4a of the roller conveyor 4.

The long sides of the roller conveyor 4 are the casing structures 4b, the outer walls 4o of which form the side walls of the actuator 1. The end walls 4e of the roller conveyor 4 correspondingly form the end walls of actuator 1. On top of the casing structures 4b on the sides of the roller conveyor 4 are the essentially narrow, flat and shallow side edges 7 of the actuator 1.

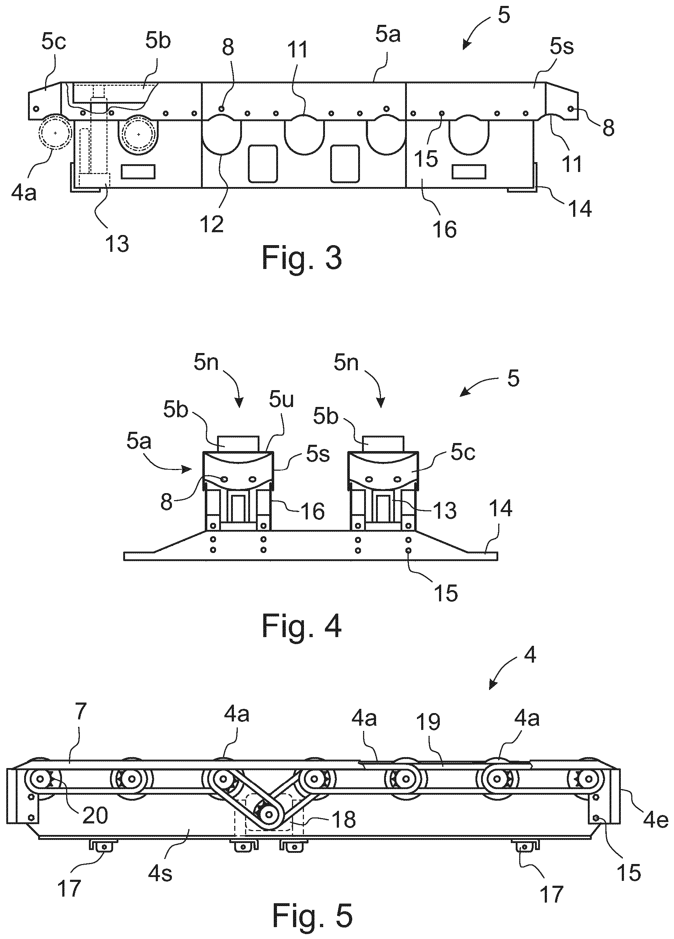

Figs. 3 and 4 present the structure of the lifting device 5 in more detail, but simplified and partially sectioned. Fig. 3 presents the structure of the lifting device 5 as seen from the side and Fig. 4 as seen from the front. In Fig. 3, the lifting platform 5b is shown in the lower position, in which case the upper surface of the lifting platform 5b is preferably flush with the upper surface 5u of the casing structure.

The lifting device 5 comprises two parallel elongated lifting means 5n, at a horizontal distance from each other, which are connected to each other by cross members 14 situated below the conveyor rollers 4a at the lower ends of lifting means 5n, and possibly by other support members. The lifting means 5n, cross members and support members form the frame structure of the lifting device 5. The lifting device 5 is preferably located in the center of the actuator 1 in the width direction of the actuator 1.

The casing structures 5a of the lifting means 5n of the lifting device 5 and the lifting platforms 5b inside them are parallel to the direction of travel of the conveyor 4, i.e. at a right angle to the axes of rotation of the rollers 4a. This enables, *inter alia,* the handling of pallets with both the conveyor 4 and the lifting device 5 of the same actuator.

The casing structures 5a and at the same time the lifting platforms 5b are also essentially parallel to the main direction of travel of the mobile robot 2, i.e. the longitudinal direction of the mobile robot 2. The casing structures 5a and lifting platforms 5b are similar to each other and extend in their longitudinal direction at a right angle over more than one roller 4a, preferably over all the rollers 4a of the conveyor 4.

The lifting means 5n are positioned partially inside the roller conveyor 4 in both the width and height direction of the actuator 1. Each lifting means 5n is preferably an enclosure-like structure assembled from metal plates, which structure comprises two essentially vertical side walls 16 at a horizontal distance from each other, and the aforesaid casing structure 5a, which is open downwards and resembles the shape of a rectangular U-profile in cross-section, connecting the upper edges of the side walls 16. The casing structure 5a is fastened at its lower edges to the upper edges of the side walls with fastening means 15, such as screws and nuts.

Since the casing structure 5a and the frame structure assembled from the side walls 16 below it are tapered towards their ends as viewed from above, the casing structure 5a and the side walls 16 of the lifting means 5n are preferably assembled from shorter parts. In this case, the casing structure 5a can be assembled lengthwise from three consecutive parts e.g. in such a way that at the first end of the casing structure 5a there are two side walls 16 of the first part and the part of the casing structure 5a connecting them, in the center part of the casing structure there are two side walls 16 of the second part and the part of the casing structure 5a connecting them, and at the second end of the casing structure 5a there are two side walls of the third part and the part of the casing structure 5a connecting them. The lengths of the parts can be different to each other. In addition, the casing structure 5a has the aforesaid end part 5c at each end.

The lifting platform 5b is situated in the opening in the upper surface 5u of the casing structure 5a to move vertically back and forth moved by its lifting mechanism 13. Preferably, there is one lifting mechanism 13 at each end of a lifting platform 5b. All four lifting mechanisms 13 of the lifting platform 5 are synchronized with each other and arranged to raise the lifting platforms 5b from their initial position upwards to the extent that e.g. the pallet at the point of the lifting platforms 5b rises a few centimeters from its bed. The lifting and lowering movements are preferably e.g. between 1 and 10 cm.

At each end of the lifting platform 5b, the lifting mechanism 13 is situated between two consecutive rollers 4a of the conveyor 4 in such a way that the lower end of the lifting mechanism 13 is below the rollers 4a and the upper end is above the rollers 4a. The lifting mechanism 13 of the lifting device 5 can comprise a spindle motor, a hydraulic cylinder, a compressed air cylinder, or any other suitable power means.

In the bottom edge of the vertical side walls 5s of the casing structure 5a are recesses 11, as many as there are rollers 4a, said recesses opening downwards and extending upwards, preferably in the shape of a circular arc, at the division of the rollers 4a of the conveyor 4. Correspondingly, on the side walls 16 of the lifting means 5n there are openings 12 with a curved bottom opening upwards, at the same point as the recesses 11 and with the same spacing as them. Preferably, there are two fewer openings 12 than there are recesses 11. The shape and size of the recesses 11 and the openings 12 are such that the conveyor rollers 4a placed through them can rotate freely around their own center axes.

The lower edges of the side walls 5s of the casing structure 5a may be attached, or almost attached, to the flat surface 6 between the rollers 4a, or they may also be below the flat surface 6, in which case the flat surface 6 is formed from small surface plates, as explained above. In all the structural solutions, there is a small clearance between the recesses 11 and the rollers 4a, but at least large enough to allow the rollers 4a to rotate without touching the surfaces of the recesses 11.

The rollers of the conveyor 4 are either threaded through the openings 12 in the side walls 16 during the installation phase of the actuator 1, or positioned through the open upper end of the openings 12 before the fastening of the casing structure 5a to the side walls 16 of the lifting means 5n.

From the above, it can be stated that in the solution according to the embodiment presented, the rollers 4a of the conveyor 4 are fitted through the frame structure of the lifting device 5 at the point of the openings 12 in the side walls 16 of the frame structure.

On the opposite side surfaces 5s of the frame structures 5a of the lifting means 5n is a plurality of sensors 8, which are arranged to detect the position on top of the actuator 1 of the pallet or other load to be taken onto the actuator 1. The detection can function e.g. by means of a light beam 9. When the position is correct, the movement of the mobile robot 2 and/or of the rollers 4a of the roller conveyor is stopped.

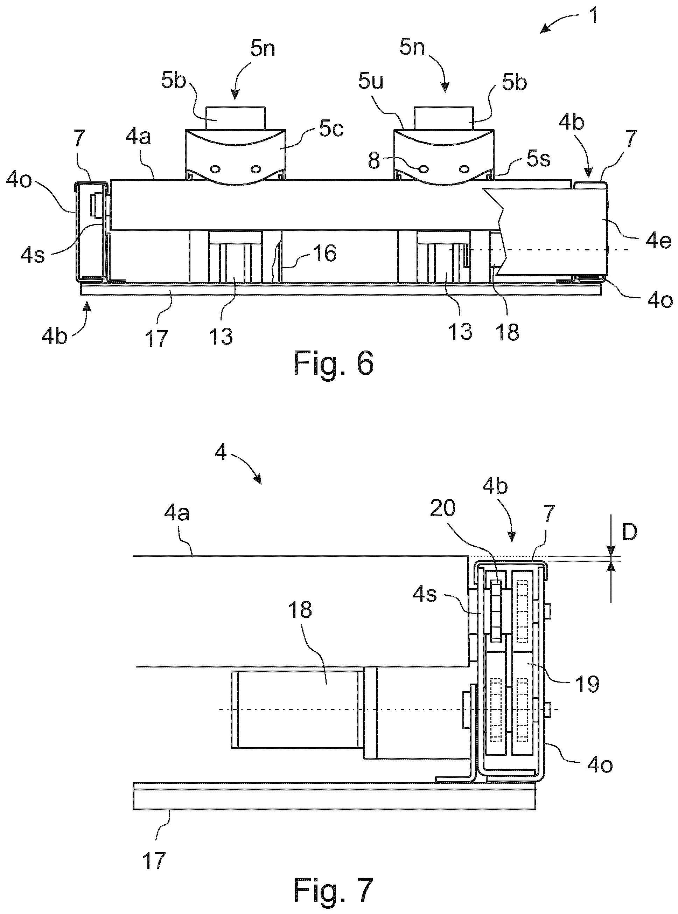

Figs. 5-7 present in more detail one structure of the conveyor according to the invention. Fig. 5 shows a conveyor as viewed from the side, Fig. 6 shows one actuator 1 according to the invention as viewed from the front and partially sectioned, and Fig. 7 shows one edge of the actuator according to Fig. 6 enlarged and simplified and with the end wall 4e of the conveyor section removed.

The frame structure of the conveyor 4 comprises a casing structure 4b on each side of the conveyor and an end wall 4a at each end of the conveyor. The casing structures 4b on the sides are connected to each other by transverse support members 17 on the underside of the frame structure, which members can also be used to fasten the actuator to a mobile robot 2. In Fig. 5, the outer wall 4o of the casing structure 4b has been removed to illustrate the structure of the conveyor.

Preferably the conveyor 4 in the actuator 1 is a roller conveyor having a plurality of rollers 4a rotated by the drive machinery 18 by means of the chains 19. Preferably, the rotational motion of the rollers 4a is brought from the shaft of the drive machinery 18 to the rollers 4a via a chain 19 connecting only two rollers 4a. In this case, two parallel sprocket wheels 20 are in use on each shaft of a roller 4a, with the exception of the end rollers, the first of which sprockets has a chain rotating the roller, said chain coming from the previous roller, and the second sprocket has a chain rotating the next roller going to the next roller. This is a power transmission solution that is *per se* known in the art. The drive machinery 18 can be e.g. an electric motor with gearing, or a gearless electric motor solution.

Fig. 6 presents one actuator 1 according to the invention as viewed from the front and with the end wall 4e of the frame structure of the conveyor 4 partially sectioned, and also with the lifting platforms 5b of lifting device 5 raised to their upper position. Figs. 6 and 7 clearly show how the roller 4a of the conveyor 4 is positioned through the side walls 16 of the lifting means 5n of the lifting device from the casing structure 4b of the first side of the conveyor to the casing structure 4b of the second side.

Fig. 7 presents one edge of the actuator 1 according to Fig. 6, enlarged and simplified, and with the end wall 4e of the conveyor section 4e removed. The rollers 4a of the conveyor 4 can be provided with bearings either on the inner wall 4s of the casing structure 4b or on the outer wall 4o. Fig. 7 also shows clearly how the upper surface of the roller 4a is higher than the upper surface of the casing structure 4b, and at the same time than the upper surface of the side edge 7 of the actuator 1 by the distance D. Preferably, the distance D is e.g. between 1 and 30 mm.

This structural solution makes it possible, among other things, to drive a mobile robot 2 provided with an actuator 1 according to the invention into a pallet rack in order to remove the pallet from the rack and lower it onto the rack. Many actuators with a conveyor that are known in the art have high side edges that, owing to their height, prevent an actuator from being driven into a pallet rack according to the standard.

In such a case, higher and also wider specially-made pallet racks must be used, as the higher side edges require more vertical space and the width of the higher side edges also widens the useful width of the entire actuator to the extent of its combined width. In this case, e.g. in actuators with higher side edges known in the art, the width of the load to be transferred by the conveyor must be smaller than the horizontal distance between the edges, at least up to the height of the upper surfaces of the edges. Correspondingly, in the solution according to the invention the load to be moved by a conveyor can be wider in terms of its entire height than the actuator.

However, a wider actuator according to known technology may not necessarily fit inside a standard-width pallet rack owing to its width.

The conveyor 4 and lifting device 5 are actuator means for loading and removing a load, e.g. a pallet with loads, onto the actuator 1 and removing it from the actuator 1. In the solution according to the invention, these actuator means are located in the same actuator 1 and allow the load to be taken onto the actuator 1 both by a conveyor, i.e. by moving the load horizontally, and by lifting, i.e. by moving the load vertically.

It is obvious to the person skilled in the art that different embodiments of the invention are not limited to the examples described above, but that they may be varied within the scope of the claims presented below. Thus, for example, a conveyor solution can be something other than a roller conveyor, e.g. a belt or chain conveyor. Likewise, instead of full-length rollers across the width of the conveyor, a roller conveyor may comprise three or more parallel roller tracks with short rollers between and outside the lifting means of the lifting device. In this case, e.g. only one or two roller tracks can be provided with roller rotating machinery, and the rest of the roller tracks can rotate freely.

It is further obvious to the person skilled in the art that instead of a chain drive, the conveyor could also be provided with other drive methods. In this case, e.g. the rotational motion can be transmitted by one or more toothed belts with belt pulleys, or also one or more V-belts with belt pulleys. Likewise, instead of a chain or belt that transmits rotational motion from one roller to another, the solution can have only one or two chains or belts that transmit rotational motion to all rollers simultaneously.

It is also obvious to the person skilled in the art that the structure of the hoisting device can also be different than what is described above. For example, a lifting device may have only one lifting mechanism arranged to raise one or two lifting platforms, or two lifting mechanisms, each arranged to raise its own lifting platform.

It is also obvious to the person skilled in the art that the lifting mechanisms can be completely separate, but preferably synchronized with each other. In this case, the lifting device may have e.g. four separate lifting mechanisms in two rows with each other, each of which may have its own lifting platform. The distance between the rows can be the same as the distance between the casing structures of the aforesaid lifting means, in which case pallets can also be handled with such a machine structure.

It is also obvious to the person skilled in the art that e.g. the lifting means and its machinery can be completely above the conveyor. In this case, the lifting movement can be executed e.g. by means of a scissor-type or some other low-structured lifting mechanism.

It is also obvious to the person skilled in the art that the means in connection with lifting platforms for moving storage shelves and rack trolleys from one place to another can include other solutions than just openings in exactly the right places. In this case, instead of openings, there may be restraining pins at the points of said openings rising upwards from the top surface of the lifting platforms, the lifting mechanisms of which pins can be below and between the conveyor rollers in the same way as the lifting mechanisms of the lifting platforms, or inside the casing structures of the lifting means above the conveyor rollers.

## Claims

1. An actuator (1) situated in connection with an unmanned transport device, the actuator comprising a frame structure (3), a fastening mechanism (17) for fastening the actuator (1) into connection with a transport device, and actuator means for taking a load onto the actuator (1) and removing it from the actuator, whereby the actuator means for taking and removing a load comprise a conveyor (4) provided with rollers (4a) and a lifting device (5) in the same actuator (1), which lifting device is arranged to move the load vertically in relation to the surface level of the conveyor (4), and that the lifting device (5) is provided with two lifting means (5n), both of which comprise a casing structure (5a), **characterized in that** inside the casing structure (5a) is a lifting platform (5b), which is above the rollers (4a) of the conveyor (4) and at a right angle to the axis of rotation of the rollers (4a), and which casing structures (5a) and lifting platforms (5b) extend in their longitudinal direction over more than one roller (4a), preferably over all the rollers (4a) of the conveyor (4).

2. Actuator (1) according to claim 1, **characterized in that** the lifting mechanism (13) of a lifting device (5) is situated between two rollers (4a) of a conveyor (4) in such a way that at least a part of the lifting mechanism is below the rollers (4a) and a part of the lifting mechanism is above the rollers (4a).

3. Actuator (1) according to claim 1 or 2, **characterized in that** the rollers (4a) of a conveyor (4) are fitted through the frame structure of the lifting device (5) at the openings (12) in the side walls (16) of the frame structure.

4. Actuator (1) according to any of the preceding claims, **characterized in that** the upper surface of the rollers (4a) of the conveyor (4) is higher by the distance (D) than the upper surface of the side edge (7) of the actuator (1).

5. Actuator (1) according to any of the preceding claims, **characterized in that** on the opposite side surfaces of the frame structures (5a) of the lifting means (5n) is a plurality of sensors (8), which are arranged to detect the position on top of the actuator (1) of the load to be taken onto the actuator (1).

6. A transport arrangement comprising a mobile robot (2), on top of which an actuator (1) is fitted, which actuator is arranged to handle different loads, whereby the actuator (1) comprises both a conveyor (4) provided with rollers (4b) and also a lifting device (5) for handling the load, which lifting device is arranged to move the load vertically with respect to the surface level of the conveyor (4), in which case the lifting device (5) is provided with two lifting means (5n), **characterized in that** both lifting means (5n) comprise a lifting platform (5b) inside the casing structure (5a), which lifting platform is above the rollers (4a) of the conveyor (4) and at a right angle to the axis of rotation of the rollers (4a), and which casing structures (5a) and lifting platforms (5b) extend at a right angle in their longitudinal direction over more than one roller (4a), preferably over all the rollers (4a) of the conveyor (4).

7. Transport arrangement according to claim 6, **characterized in that** the lifting mechanism (13) of a lifting device (5) is situated between two rollers (4a) of a conveyor (4) in such a way that at least a part of the lifting mechanism is below the rollers (4a) and a part of the lifting mechanism is above the rollers (4a).

8. Transport arrangement according to claim 6 or 7, **characterized in that** the rollers (4a) of a conveyor (4) are fitted through the frame structure of the lifting device (5) at the openings (12) in the side walls (16) of the frame structure.

9. Transport arrangement according to any of the preceding claims, **characterized in that** the upper surface of the rollers (4a) of the conveyor (4) is higher by the distance (D) than the upper surface of the side edge (7) of the actuator (1).

10. Transport arrangement according to any of the preceding claims, **characterized in that** on the opposite side surfaces of the frame structures (5a) of the lifting means (5n) is a plurality of sensors (8), which are arranged to detect the position on top of the actuator (1) of the load to be taken onto the actuator (1).

11. **Use** of an actuator according to claim 1 or of an arrangement according to claim 6 for moving a pallet with a conveyor and/or with a hoist.
